# EUROPÄISCHE PATENTSCHRIFT

(11) **EP 1 923 336 B1**
(45) Veröffentlichungstag und Bekanntmachung des Hinweises auf die Patenterteilung: **29.10.2008**
(21) Anmeldenummer: 06023744.3
(22) Anmeldetag: 15.11.2006
(51) Int. Cl.: B65G 23/44, B65G 47/84, B65G 17/32

(54) **Fördereinrichtung**
Conveyor
Transporteur

(43) Veröffentlichungstag der Anmeldung: 21.05.2008
(73) Patentinhaber: INDAG Gesellschaft für Industriebedarf mbH & Co. Betriebs KG, 69214 Eppelheim (DE)
(72) Erfinder: Wild, Hans-Peter, 69214 Eppelheim (DE); Kraft, Eberhard, 74924 Neckarbischofsheim (DE)
(74) Vertreter: Grünecker, Kinkeldey, Stockmair & Schwanhäusser Anwaltssozietät

(56) Entgegenhaltungen:
- DE-A1- 2 109 709
- GB-A- 2 144 384

## Beschreibung

Die Erfindung bezieht sich auf eine Fördereinrichtung der im Oberbegriff von Anspruch 1 erläuterten Art.

Eine derartige Fördereinrichtungen ist aus der GB-A-2144384 bekannt. Diese Druckschrift zeigt eine Fördereinrichtung mit einem endlos um wenigstens drei Umlenkwalzen umlaufenden Fördermittel, wobei die Spannung im Fördermittel durch ein Verschieben einer der Umlenkwalzen eingestellt wird. Zu diesem Zweck ist die Achse dieser Umlenkwalze über Schlitze längsverschieblich einstellbar.

Die DE-A-2109709 betrifft ein Verfahren und eine Vorrichtung zum Übergeben von Werkstücken von einem Förderer an einen folgenden Förderer, insbesondere von Packmaterialzuschnitten bei Packmaschinen. Die Übergabestation zwischen den beiden Förderern enthält ein Rad, das beide Förderer verbindet. Im Bereich des Rades ist eine Betätigungseinrichtung zum Öffnen und/oder Schließen von Befestigungseinrichtungen für die zu fördernden Artikel vorgesehen.

Im Stand der Technik bekannte Fördereinrichtungen enthalten meist zwei Umlenkwalzen, um die das Fördermittel geschlungen ist. Es können jedoch auch je nach dem gewünschten Verlauf der Förderrichtung drei oder noch mehr Umlenkwalzen vorgesehen sein. Endlos umlaufende Fördermittel, wie beispielsweise Ketten oder Riemen oder dgl. können mit zunehmender Betriebsdauer ihre Spannung zwischen den Umlenkwalzen verlieren, beispielsweise indem sich die Fördermittel dehnen oder die Umlenkwalzen verschleißen. Eine mangelnde Spannung des Fördermittels kann sich in einem unruhigen Lauf mit starken Bewegungen der zu fördernden Gegenstände, einem Schlupf im Bereich der Umlenkwalzen oder dem Verlust einer exakten Ausrichtung der Gegenstände im Förderweg äußern, der beispielsweise an Übergabestellen der Gegenstände wichtig ist. Um die Längenänderung des Fördermittels auszugleichen, wurde bereits vorgeschlagen, eine der üblichen Riemenspanner einzusetzen, bei denen, meist von außen, d.h. außerhalb des geschlossenen Kreises des endlosen Fördermittels, ein Auslenkelement gegen das Fördermittel gedrückt wird, so dass die vergrößerte Länge des Fördermittels durch einen verlängerten Förderweg ausgeglichen wird, und die Spannung im Fördermittel konstantgehalten werden kann. Diese Spanneinrichtungen bewirken jedoch relativ kleinräumige, lokale Umlenkungen im Fördermittel, die wiederum einen unverhältnismäßig großen Anstieg der Antriebsleistung bewirken.

Der Erfindung liegt somit die Aufgabe zugrunde, eine Fördereinrichtung mit einer Spanneinrichtung bereitzustellen, mit der die erforderliche Spannung im Fördermittel auf konstruktiv einfache Weise und effektiv aufrechterhalten werden kann.

Die Aufgabe wird durch die im Anspruch 1 angegebenen Merkmale gelöst.

Durch die Verwendung von einer von wenigstens drei Umlenkwalzen als Spanneinrichtung wird sichergestellt, dass die Auslenkung des Fördermittels zu Spannzwecken zumindest unter einem Radius erfolgt, der derart an die Flexibilität des Fördermittels angepasst ist, dass das Fördermittel ohne Verlust der Antriebsleistung die Umlenkung durchlaufen kann. Darüber hinaus wird durch die Tatsache, dass eine der anderen Umlenkwalzen ortsfest gelagert ist, ein fester Bezugspunkt geschaffen, der eine Schnittstelle für benachbarte Anlagen oder Maschinen bildet. Die Umlenkwalze der Spanneinrichtung ist mit einem Spannhebel mit der ortsfest gelagerten Umlenkwalze verbunden ist, so dass die Spannbewegung der Spanneinrichtung koaxial mit der Drehachse der ortsfest gelagerten Umlenkwalze erfolgt. Auf diese Weise wird sichergestellt, dass sich der Übergabepunkt in der Übergabestation in der ortsfest gelagerten Umlenkwalze nicht verschiebt und der Fördertakt nicht verändert werden muss, wenn das Fördermittel gespannt wird.

Der Übergabestation ist wie üblich eine Betätigungseinrichtung für die Befestigungseinrichtung zugeordnet, damit die Gegenstände auf das Fördermittel übergeben werden können. Läuft diese Betätigungseinrichtung um die Drehachse der ersten Umlenkwalze herum, so wird durch die erfindungsgemäß ausgebildete Spanneinrichtung sichergestellt, dass sich auch hier der Fördertakt nicht verschiebt.

Die Betätigungseinrichtung kann eine Nockensteuerung und/oder eine Rampe enthalten.

Von besonderem Vorteil ist es, dass durch die erfindungsgemäße Ausgestaltung die Betätigungseinrichtung oder Teile davon direkt am Spannhebel angeordnet werden können, so dass sie automatisch der Spannbewegung nachgeführt werden und ihre Relativlage zum Fördermittel und/oder zur Übergabestation auch beim Spannen des Fördermittels nicht verlieren.

Der Spannhebel kann weiterhin mit einer Führung für das Fördermittel versehen sein, um dieses auch während des Spannens in Kontakt mit den Umlenkwalzen zu halten.

Der zweiten Umlenkwalze kann eine Einlaufführung für das Fördermittel zugeordnet sein, die dafür sorgt, dass das Fördermittel in jeder Spannstellung der zweiten Umlenkwalze glatt und ohne lokale Auslenkungen auf die zweite Umlenkwalze gelangt.

Die Erfindung eignet sich besonders für ein Fördermittel, das wenigstens eine Kette und Greifer zum Ergreifen der Gegenstände enthält.

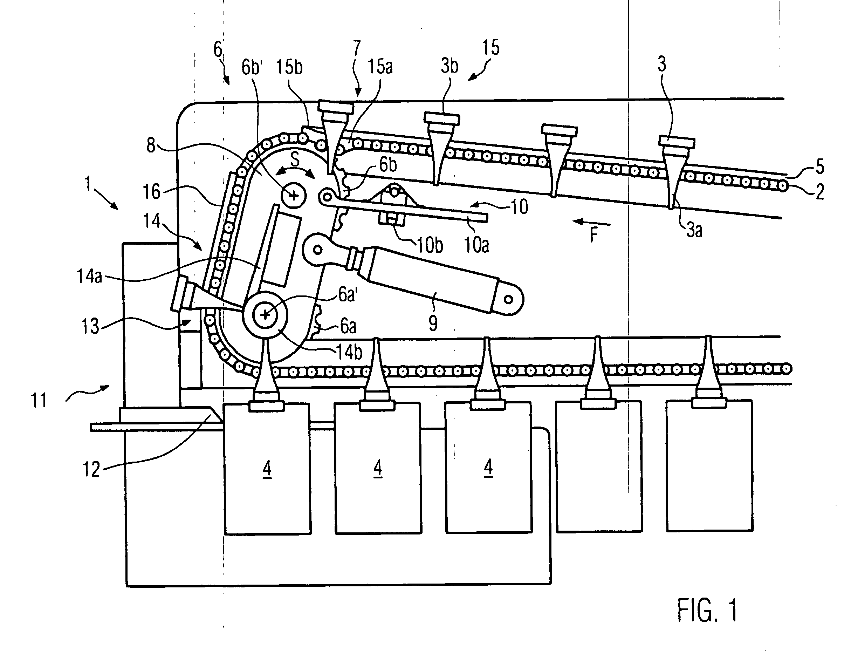

Ein Ausführungsbeispiel der Erfindung wird nachfolgend anhand der einzigen Figur 1 näher erläutert, die eine schematische Darstellung einer erfindungsgemäß ausgebildeten Fördereinrichtung 1 zeigt.

Die Fördereinrichtung 1 enthält ein endlos umlaufendes Fördermittel 2, im dargestellten Ausführungsbeispiel wenigstens eine Förderkette, auf der eine Vielzahl von Befestigungseinrichtungen 3 zum Fördern von Gegenständen 4 in vorbestimmten Abständen angeordnet sind. Die Befestigungseinrichtungen 3 sind an die Art der Gegenstände 4 angepasst und sind im dargestellten Ausführungsbeispiel beispielsweise als Greifer zum Fördern von Beuteln, insbesondere von Folien-Beuteln zum Verpacken von Getränken oder dergleichen, ausgebildet, und so konstruiert sind, dass sie die Gegenstände 4 beispielsweise an Versiegelungsnähten ergreifen und in Förderrichtung F fördern. Das Fördermittel 2 läuft in den üblichen Führungen 5, die hier nicht näher erläutert werden müssen, und um wenigstens drei Umlenkwalzen 6, von denen lediglich eine erste Umlenkwalze 6a und eine zweite Umlenkwalze 6b gezeigt sind. Im dargestellten Ausführungsbeispiel sind die Umlenkwalzen 6a, 6b mit parallelen Drehachsen 6'a, 6'b übereinander angeordnet, wobei eine Verbindungslinie zwischen den Drehachsen 6'a 6'b mit der Horizontalen durch die erste Drehachse 6'a einen spitzen Winkel, bevorzugt > 45°, einschließt. Die Umlenkwalzen 6 sind mit ihren Abmessungen, insbesondere ihrem Durchmesser, derart an die Biegbarkeit des Fördermittel 2 angepasst, dass das Fördermittel 2 auch bei hohen Fördergeschwindigkeiten klemmfrei um die Umlenkwalzen 6 läuft; und sind im Falle einer Kette als Kettenräder ausgebildet.

Die erste Umlenkwalze 6a kann als Antriebswalze ausgebildet sein, es ist jedoch auch möglich, eine der nicht gezeigten dritten oder weiteren Umlenkwalzen anzutreiben. Die erste Umlenkwalze 6a ist um eine Drehachse 6'a drehbar gelagert. Die Drehachse 6'a ist ortsfest in der Fördereinrichtung 1 angeordnet.

Die zweite Umlenkwalze 6b dient als Spanneinrichtung 7 und ist ebenfalls um eine Drehachse 6'b drehbar gelagert und darüber hinaus in Richtung auf das Fördermittel 2 und von ihm weg verschiebbar, um den Weg, den das Fördermittel 2 zurückzulegen hat, der tatsächlichen Länge des Fördermittels 2 anzupassen, so dass im Fördermittel 2 eine vorbestimmte Spannung aufrechterhalten wird.

Die Drehachse 6'b der zweiten Umlenkwalze 6b ist in einem Spannhebel 8 gelagert, der die erste und zweite Umlenkwalze 6a, 6b miteinander verbindet. Auch die Drehachse der ersten Umlenkwalze 6a ist im Spannhebel 8 gelagert, wobei der Spannhebel 8 zusammen mit der zweiten Umlenkwalze 6b um die Drehachse 6'a der ersten Umlenkwalze 6a in Richtung des Doppelpfeils S verschwenkbar ist. Die Verschwenkbewegung wird über einen Stellzylinder 9 oder irgendein anderes Betätigungsmittel bewirkt, das am Spannhebel 8 oder direkt an der Drehachse 6'b oder der zweiten Umlenkwalze 6b angreift.

Die Spanneinrichtung 7 enthält weiterhin eine Rasteinrichtung 10, mit der die vom Stellzylinder 9 bewirkte Spannstellung arretiert werden kann, beispielsweise durch einen am Spannhebel 8 angreifenden Rasthebel 10a und einer stufenlos feststellbaren (Reibung) oder in Stufen einrastenden Feder-Halteeinrichtung 10b oder dgl., so dass die Spannstellung nicht durchgehend über die Stelleinrichtung 9 gehalten werden muss.

Der Fördereinrichtung 1 ist eine Übergabestation 11 zugeordnet, in der die Gegenstände 4 den Befestigungseinrichtungen 3 zugeführt und von diesen ergriffen und wegtransportiert werden. Die Übergabestation 11 enthält zu diesem Zweck eine Einlaufführung 12 herkömmlicher Bauart, mit der die Gegenstände 4 den Befestigungseinrichtungen 3 korrekt vorgelegt werden. Die Einlaufführung 12 befindet sich in festem Abstand zur ersten Drehachse 6'a an einer der zweiten Umlenkwalzen 6b abgewandten Seite der ersten Umlenkwalze 6a, und zwar in einer Stelle, an der sich die Lagebeziehung zwischen dem Fördermittel 2 und der Umlenkwalze 6a nicht ändert, wenn die zweite Umlenkwalze 6b durch die Stelleinrichtung 9 bewegt wird. Dies ist im dargestellten Ausführungsbeispiel der Bereich unterhalb der Drehachse 6'a.

Der Übergabestation 11 ist eine Betätigungseinrichtung 13 zugeordnet, die die Befestigungseinrichtung 3 in eine Befestigungsposition zum Befestigen der Gegenstände 4 bringt. Sind die Befestigungseinrichtungen als Greifer ausgebildet, so sorgt die Betätigungseinrichtung 13 dafür, dass sich Greiferbacken beidseitig eines Greifbereiches, beispielsweise der oberen Versiegelungsnaht 4a eines Folienbeutels, klemmend anlegen.

Die Betätigungseinrichtung 13 wirkt mit einem Betätigungsstößel 3a zusammen, durch den beispielsweise über ein Hebelgestänge Greifbacken 3b aus ihrer normalerweise geschlossenen Stellung zunächst geöffnet und nach dem Aufnehmen des Gegenstandes 4 wieder geschlossen werden. Zu diesem Zweck enthält die Betätigungseinrichtung 13 eine Nockenanordnung 14, die im dargestellten Ausführungsbeispiel eine Rampe 14a enthält, die in einen Flansch 14b mündet, der sich koaxial zur Drehachse 6'a der ersten Umlenkwalze 6a erstreckt. Die Rampe 14a ist fest am Spannhebel 8 angeordnet und zusammen mit dem Spannhebel 8 bewegbar, so dass sich die Rampe 14a in gleichbleibendem Abstand zum Fördermittel 2 befindet, egal welche Spannstellung der Spannhebel 8 einnimmt. Der Flansch 14b kann ebenfalls fest am Spannhebel 8 angeordnet sein oder kann sich mit der Umlenkwalze 6a drehen bzw. mit dem Fördermittel 2 bewegen. Die Rampe 14a erstreckt sich bevorzugt zwischen den beiden Drehachsen 6'a und 6'b und ist so angeordnet, dass die Betätigungsstempel 3a der einlaufenden Befestigungseinrichtungen 3 auf die Rampe 14a auflaufen, wodurch die Befestigungseinrichtung 3 in Offenstellung gebracht wird, und dann durch den Flansch 14b so lange in Offenstellung gehalten wird, bis sich die Gegenstände 4 in der Befestigungsposition befinden. Im dargestellten Ausführungsbeispiel werden die Gegenstände 4 so lange durch die Einlaufführung 12 gehalten, bis das Befestigungsmittel 3 senkrecht unterhalb der Drehachse 6'a der ersten Umlenkwalze 6a durchgelaufen ist und der Betätigungsstempel 3a den Kontakt mit dem Flansch 14b verliert.

Die Führung 5 für das Fördermittel 2 enthält beim Einlauf in die zweite Umlenkwalze 6b eine Einlaufführung 15, die einen vorbestimmten Freiraum für eine Bewegung des Fördermittels 2 senkrecht zur Drehachse 6'b der zweiten Umlenkwalze 6b bietet. Bevorzugt wird dieser Freiraum durch eine trichterförmige Erweiterung 15a der Einlaufführung 15 gebildet. Auf diese Weise wird sichergestellt, dass das Fördermittel 2 problemlos in die zweite Umlenkwalze 6b einlaufen kann, egal an welcher Stelle der Spannbewegung in Richtung des Pfeils S sich die zweite Umlenkwalze 6b befindet. Die Einlaufführung 15 enthält weiterhin einen sich an den trichterförmigen Einlaufbereich 15a in Förderrichtung F anschließenden Führungsbereich 15b, der koaxial zur Drehachse 6'a der ersten Umlenkwalze 6a verläuft und so angeordnet ist, dass er das auf der zweiten Umlenkwalze 6b aufgelaufene Fördermittel 2 in jeder Stellung entlang des Pfeils S überdeckt.

Dem Spannhebel 8 ist ein weiteres Führungsteil 16 zugeordnet, das dafür sorgt, dass das Fördermittel 2 nach dem Verlassen der zweiten Umlenkwalze 6b exakt auf die erste Umlenkwalze 6a überführt wird.

Beim Betrieb der erfindungsgemäßen Fördereinrichtung 1 wird das Fördermittel 2 mit den darauf befestigten Befestigungseinrichtungen 3 in Förderrichtung F angetrieben und läuft über die Umlenkwalzen 6 und durch die Führung 5 bis zur Übergabestation 11. Dort werden die Befestigungseinrichtungen nacheinander in eine Position gebracht, in der sie die Gegenstände 4 übernehmen können und anschließend in eine weitere Position gebracht, in der sie die Gegenstände 4 in der Förderbewegung mitnehmen.

Lockert sich während des Fördervorganges die Spannung im Fördermittel 2, beispielsweise durch Ausdehnung des Fördermittels 2 und/oder durch Verschleiß in den Umlenkwalzen 6 oder durch sonstige Einflüsse, so wird die Stelleinrichtung 9 betätigt und bewegt die zweite Umlenkwalze 6b (über den Spannhebel 8) entlang des Pfeils S um die Drehachse 6'a der ersten Umlenkwalze 6a gegen das Fördermittel 2, so dass der Weg, den das Fördermittel 2 zurückzulegen hat, vergrößert wird und das Fördermittel 2 wieder unter die korrekte Spannung gesetzt wird. Zusammen mit der zweiten Umlenkwalze 6b bewegt sich der Spannhebel 8, und mit dem Spannhebel 8 bewegt sich die Rampe 14a und die Führung 16. Damit bleiben die Relativlagen zwischen dem Fördermittel 2 und der Betätigungseinrichtung 13, insbesondere der Nockeneinrichtung 14 in jeder Stellung entlang des Doppelpfeils S gleich.

In Abwandlung des beschriebenen und gezeichneten Ausführungsbeispiels kann die erfindungsgemäße Spanneinrichtung an jeder geeigneten Fördereinrichtung mit endlos umlaufenden Fördermitteln eingesetzt werden. Auf die Art und Weise, wie die Gegenstände am Fördermittel befestigt werden, und die Art der Betätigung der Befestigungsmittel kann abgewandelt werden. Die Rasteinrichtung kann entfallen, insbesondere dann, wenn eine stetig nachgeführte Stelleinrichtung eingesetzt wird.

## Patentansprüche

1. Fördereinrichtung (1) mit einem endlos um wenigstens drei Umlenkwalzen (6) umlaufenden Fördermittel (2), an dem eine Vielzahl von Befestigungseinrichtungen (3) für zu fördernde Gegenstände (4) angeordnet sind, mit einer ersten, ortsfest gelagerten Umlenkwalze (6a), einer Übergabestation (11) zum Übergeben der Gegenstände (4) an die Befestigungseinrichtung (3) und einer zweiten Umlenkwalze (6b), die als Spanneinrichtung (7) für das Fördermittel (2) ausgebildet und zum Spannen des Fördermittels (2) bewegbar ist, **dadurch gekennzeichnet, dass** die Übergabestation an der ersten Umlenkwalze (6a) vorgesehen ist, und die zweite Umlenkwalze (6b) mit der ersten Umlenkwalze (6a) über einen Spannhebel (8) verbunden ist, der um die Drehachse (6'a) der ersten Umlenkwalze (6a) verschwenkbar ist.

2. Fördereinrichtung nach Anspruch 1, **dadurch gekennzeichnet, dass** die Übergabestation (11) eine Betätigungseinrichtung (13) zum Öffnen und/oder Schließen der Befestigungseinrichtung (3) enthält, die um die Drehachse (6'a) der ersten Umlenkwalze (6a) bewegbar ist.

3. Fördereinrichtung nach Anspruch 2, **dadurch gekennzeichnet, dass** die Betätigungseinrichtung (13) eine Nockensteuerung (14) enthält.

4. Fördereinrichtung nach Anspruch 3, **dadurch gekennzeichnet, dass** die Betätigungseinrichtung (13) eine Rampe (14a) enthält, die um die Drehachse (6'a) der ersten Umlenkwalze (6a) verschwenkbar ist.

5. Fördereinrichtung nach einem der Ansprüche 2 bis 4, **dadurch gekennzeichnet, dass** die Betätigungseinrichtung (13) für die Befestigungseinrichtung (3) am Spannhebel (8) angeordnet ist.

6. Fördereinrichtung nach einem der Ansprüche 1 bis 5, **dadurch gekennzeichnet, dass** der Spannhebel (8) eine Führung (16) für das Fördermittel (2) aufweist.

7. Fördereinrichtung nach einem der Ansprüche 1 bis 6, **dadurch gekennzeichnet, dass** der zweiten Umlenkwalze (6b) eine Einlaufführung (15) für das Fördermittel (2) zugeordnet ist.

8. Fördereinrichtung nach einem der Ansprüche 1 bis 7, **dadurch gekennzeichnet, dass** eine Rasteinrichtung (10) zum Festlegen der Spannstellung der Spanneinrichtung (7) vorgesehen ist.

9. Fördereinrichtung nach einem der Ansprüche 1 bis 8, **dadurch gekennzeichnet, dass** das Fördermittel (2) wenigstens eine Kette enthält, an der in vorbestimmten Abständen Greifer zum Ergreifen der Gegenstände (4) befestigt sind.

## Claims

1. Conveyor system (1) comprising a conveying means (2) continuously rotating about at least three deflection rollers (6), on which a plurality of fixing devices (3) for articles (4) to be conveyed are disposed, comprising a first stationary deflection roller (6a), a transfer station (11) for transferring the articles (4) to the fixing device (3), and a second deflection roller (6b) which is configured as a tensioning device (7) for the conveying means (2) and is movable to tension the conveying means (2), **characterized in that** the transfer station is provided on the first deflection roller (6a), and the second deflection roller (6b) is connected to the first deflection roller (6a) by a tension lever (8) which is pivotable about the pivot (6'a) of the first deflection roller (6a).

2. Conveyor system according to claim 1, **characterized in that** the transfer station (11) comprises an operating device (13) for opening and/or closing the fixing device (3), which is movable about the pivot (6'a) of the first deflection roller (6a).

3. Conveyor system according to claim 2, **characterized in that** the operating device (13) comprises a cam control (14).

4. Conveyor system according to claim 3, **characterized in that** the operating device (13) comprises a ramp (14a) which is pivotable about the pivot (6'a) of the first deflection roller (6a).

5. Conveyor system according to one of claims 2 to 4, **characterized in that** the operating device (13) for the fixing device (3) is disposed on the tension lever (8).

6. Conveyor system according to one of claims 1 to 5, **characterized in that** the tension lever (8) comprises a guide (16) for the conveying means (2).

7. Conveyor system according to one of claims 1 to 6, **characterized in that** a run-in guide (15) for the conveying means (2) is associated with the second deflection roller (6b).

8. Conveyor system according to one of claims 1 to 7, **characterized in that** a locking device (10) for arresting the tensioned position of the tensioning device (7) is provided.

9. Conveyor system according to one of claims 1 to 8, **characterized in that** the conveying means (2) comprises at least one chain on which grippers for gripping the articles (4) are attached at predetermined distances.

## Revendications

1. Dispositif de transport (1) comprenant un moyen de transport (2) circulant en continu autour d'au moins trois rouleaux de renvoi (6), sur lequel est aménagée une pluralité de dispositifs de fixation (3) pour des objets (4) à transporter, un premier rouleau de renvoi (6a) monté fixe, un poste de transfert (11) pour transférer les objets (4) au dispositif de fixation (3) et un deuxième rouleau de renvoi (6b), qui se présente sous la forme d'un dispositif de serrage (7) pour le moyen de transport (2) et peut être déplacé pour serrer le moyen de transport (2), **caractérisé en ce que** le poste de transfert est prévu sur le premier rouleau de renvoi (6a) et le deuxième rouleau de renvoi (6b) est raccordé au premier rouleau de renvoi (6a) par le biais d'un levier de serrage (8), qui peut pivoter autour de l'axe de rotation (6'a) du premier rouleau de renvoi (6a).

2. Dispositif de transport selon la revendication 1, **caractérisé en ce que** le poste de transfert (11) contient un dispositif d'actionnement (13) pour ouvrir et/ou pour fermer le dispositif de fixation (3), qui peut être déplacé autour de l'axe de rotation (6'a) du premier rouleau de renvoi (6a).

3. Dispositif de transport selon la revendication 2, **caractérisé en ce que** le dispositif d'actionnement (13) contient une commande à cames (14).

4. Dispositif de transport selon la revendication 3, **caractérisé en ce que** le dispositif d'actionnement (13) contient une rampe (14a) qui peut pivoter autour de l'axe de rotation (6'a) du premier rouleau de renvoi (6a).

5. Dispositif de transport selon l'une quelconque des revendications 2 à 4, **caractérisé en ce que** le dispositif d'actionnement (13) pour le dispositif de fixation (3) est aménagé sur le levier de serrage (8).

6. Dispositif de transport selon l'une quelconque des revendications 1 à 5, **caractérisé en ce que** le levier de serrage (8) présente un guidage (16) pour le moyen de transport (2).

7. Dispositif de transport selon l'une quelconque des revendications 1 à 6, **caractérisé en ce qu'**un guidage d'entrée (15) pour le moyen de transport (2) est affecté au deuxième rouleau de renvoi (6b).

8. Dispositif de transport selon l'une quelconque des revendications 1 à 7, **caractérisé en ce qu'**il est prévu un dispositif d'arrêt (10) pour fixer la position de serrage du dispositif de serrage (7).

9. Dispositif de transport selon l'une quelconque des revendications 1 à 8, **caractérisé en ce que** le moyen de transport (2) contient au moins une chaîne, à laquelle sont fixés, à intervalles prédéterminés, des dispositifs de préhension pour saisir les objets (4).
